# EUROPEAN PATENT SPECIFICATION

(11) **EP 1 979 064 B1**
(45) Date of publication and mention of the grant of the patent: **18.12.2013**
(21) Application number: 07705767.7
(22) Date of filing: 01.02.2007
(51) Int. Cl.: B01D 29/44, B07B 1/46

(54) **FILTER ELEMENT AND METHOD FOR PRODUCING THE FILTER ELEMENT**
FILTERELEMENT UND VERFAHREN ZU DESSEN HERSTELLUNG
ÉLÉMENTS FILTRANTS ET LEUR MÉTHODE DE PRODUCTION

(30) Priority: 01.02.2006 BE 200600063
(43) Date of publication of application: 15.10.2008
(73) Proprietor: Unislot NV, 8792 Desselgem (BE)
(72) Inventor: VERSTRAETE, Marc, B-8860 Lendelede (BE)
(74) Representative: Ostyn, Frans
(86) International application number: PCT/IB2007/050345
(87) International publication number: WO 2007/088519

(56) References cited:
- EP-A- 0 607 809
- EP-A- 1 057 511
- WO-A-99/50019
- DE-A- 10 065 319
- DE-A1- 3 327 422
- US-A- 3 545 621
- US-A- 4 314 129
- US-A- 6 070 739

## Description

This invention relates, on the one hand, to a filter element provided with a profile wire comprising two side flanks extending towards a welding base, the abovementioned side flanks being connected to each other by way of an end face situated opposite the welding base. On the other hand, this invention relates to a method for forming such filter elements.

Filtration is a method of separation which is used on a large scale in industry in order to separate, inter alia, solid and liquid substances from each other, to filter gases, etc. In a known form of filtration, a liquid stream is guided through a filter element.

Such filter elements have already been known for a long time and are freely commercially available. These known filter elements are used in, for example, so-called backwashing devices, consisting of a tube with a filter inflow aperture and outflow aperture, it being possible during the filtration for the filter elements to be flowed through from the inside to the outside or vice versa, or in the case of backwashing from the outside to the inside or vice versa. WO-A-9 950 019 gives an example of a pressure screen filter.

The known filter elements are constructed of longitudinal bars running in the longitudinal direction, around which a profile wire is wound. Filtering apertures are formed between one or more windings. The number of longitudinal bars depends on the size of the filter element.

The profile wire used until now has in cross section a shape corresponding to an isosceles triangle. With such profile wires, it is possible to produce filter elements with a slot aperture which, depending on use, lies between 2 mm and 30 microns, with a maximum permissible tolerance (the difference between the largest and the smallest slot aperture measured in a specific filter element) of +/- 30 microns, i.e. the effective slot aperture can be 30 microns above or below the proposed value. As a result of this maximum permissible tolerance, the known profile wire can be used only to produce filters having a minimum slot aperture of 30 microns.

The object of this invention is to provide a filter element comprising a number of bars running in the longitudinal direction, onto which a profile wire is welded, this filter element having a uniform and narrower slot aperture than the filter elements of the same type known so far.

The object of the invention is achieved by providing a filter element comprising a number of bars running in the longitudinal direction, onto which a profile wire is welded and in which filtering apertures are provided between one or more adjacent profile wires, in which the abovementioned profile wire comprises two side flanks extending towards a welding base, which side flanks are connected to each other by way of an end face situated opposite the welding base, and in which at least one of the abovementioned side flanks forms an angle lying between 88° and 93° with the end face. The filter element according to this invention is characterized in this way that the filtering apertures formed have a slot aperture of a maximum of 30 microns.

Such filter elements have the great advantage that much narrower slot apertures can be provided compared with the known filter elements. In a particular embodiment of the filter element according to the invention, the filtering apertures formed have a slot aperture lying between 10 and 25 microns. In a preferred embodiment, the abovementioned filter element has a tolerance of 25 microns or less on the slot aperture of the filtering apertures formed. In other words, the slot aperture can be 25 microns higher or lower than the proposed value. It is preferable to obtain filter elements with a tolerance of +/- 10 microns on the slot aperture formed.

In a particular embodiment of the filter element according to the invention, at least one of the abovementioned side flanks forms an angle of approximately 90° with the end face.

In a preferred embodiment of the filter element according to the invention, the abovementioned filter element is a flat filter.

In another preferred embodiment of the filter element according to the invention, the abovementioned filter element is a round filter.

Another subject of this invention relates to a method for forming a filter element in which one or more profile wires are welded onto a number of bars running in the longitudinal direction, so that filtering apertures are formed between one or more adjacent profile wires, the method comprising the following steps:
a) providing a profile wire with two side flanks extending towards a welding base, the abovementioned side flanks being connected to each other by way of an end face situated opposite the welding base, and at least one of the abovementioned side flanks forming an angle lying between 88° and 93° with the end face;
b) providing a welding device comprising supporting means for the abovementioned profile wire;
c) welding said profile wire onto the abovementioned bars, during the welding the abovementioned side flank which forms an angle lying between 88° and 93° with the end face abutting against the supporting means in order to position and weld the profile wire in such a way that the filtering apertures formed have a slot aperture of a maximum of 30 microns.

Since by this method the profile wire is much better positioned on the longitudinal bars, filter elements with a lower tolerance on their slot aperture can be produced, so that filter elements with a much narrower slot aperture can be produced. In particular, the filtering apertures formed have a slot aperture lying between 10 and 25 microns. Filter elements with a tolerance of 25 microns or less on the slot aperture of the filtering apertures formed are preferably obtained, and in particular filter elements with a tolerance of +/- 10 microns on the slot aperture formed are obtained.

By a preferred method according to the invention, the abovementioned supporting means are in the form of a wall abutting against the abovementioned side flank during the welding.

By a more particular method according to this invention, the welding device comprises a welding electrode which moves up and down. More particularly, the supporting means form part of the welding electrode which moves up and down.

The abovementioned features and advantages of the invention are explained further in the detailed description below of the filter element according to this invention and a method for producing such a filter element. It should be clear that the sole object of this description is to explain the general principles of this invention by means of a concrete example, and that nothing in this description can therefore be interpreted as a limitation of the scope of the patent rights claimed in the claims or of the field of application of this invention.

In the description below, reference is made by means of reference numerals to the appended figures, in which:
- Figure 1 (1a and 1b) is an illustration of a profile wire according to the prior art;
- Figure 2 (2a and 2b) is an illustration of a profile wire for a filter element according to the invention;
- Figure 3 shows a number of cross sections (3a and 3b) of a profile wire for a filter element according to the invention;
- Figure 4 is an illustration of a part of a filter element according to the invention;
- Figure 5 is a diagrammatic illustration of a welding device provided with supporting means for the profile wire.

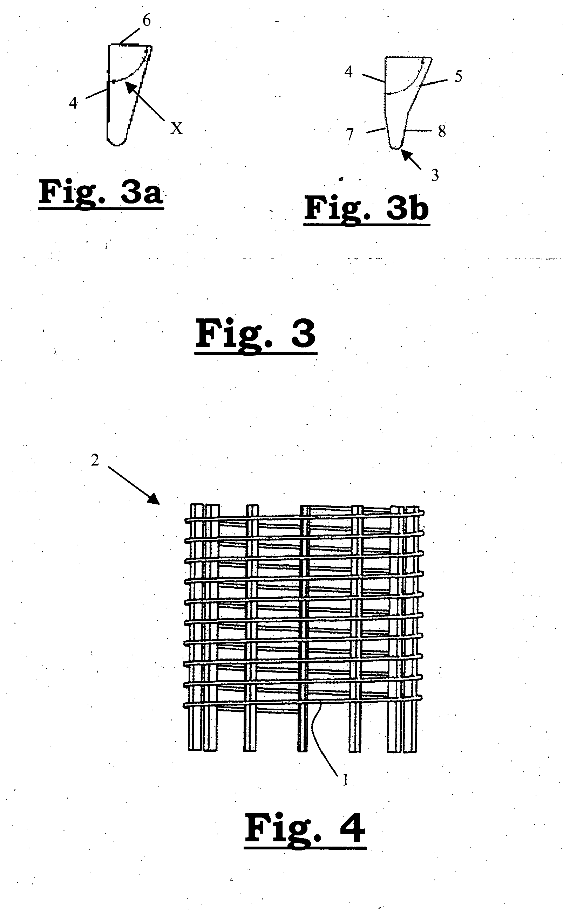

Filter elements (2) (see Figure 4) are constructed of longitudinal bars (9) running in the longitudinal direction, onto which a profile wire (1) is welded. Filtering apertures with a specific slot aperture are formed between one or more adjacent profile wires. The number of longitudinal bars (9) depends on the size of the filter element (2).

A profile wire (1) for a filter element (2) is preferably made of metal and comprises two side flanks (4, 5) extending towards a welding base (3), the abovementioned side flanks being connected to each other by way of an end face (6) situated opposite the welding base (3).

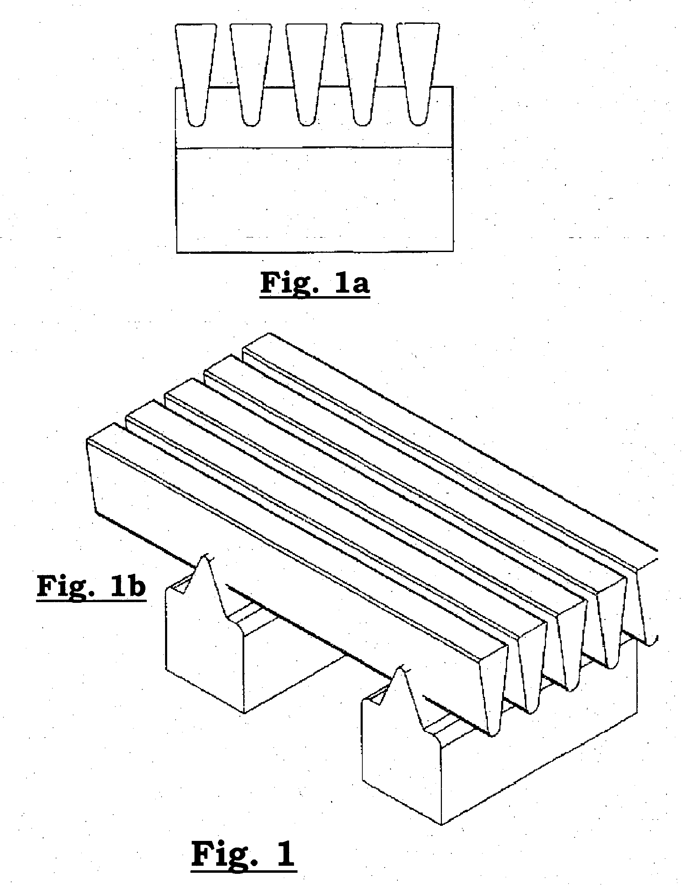

Figure 1 is an illustration of a profile wire according to, the prior art provided on a number of longitudinal bars; these known profile wires have a cross section corresponding to an isosceles triangle. Such profile wires have the disadvantage that the filter elements formed with them have a maximum tolerance of +/- 30 microns on the slot aperture, this being as a result of the inaccurate positioning of the profile wire on the longitudinal bars during the production of the filter element. This means that the filter elements formed are limited to a slot aperture of 40 - 50 microns, and filter elements with a uniform smaller slot aperture cannot be produced by the known methods and with the known profile wires according to the prior art.

However, by the method according to this invention it is possible to produce filter elements with a uniform smaller slot aperture. The filter elements according to the invention are characterized in that the filtering apertures formed have a slot aperture of a maximum of 30 microns.

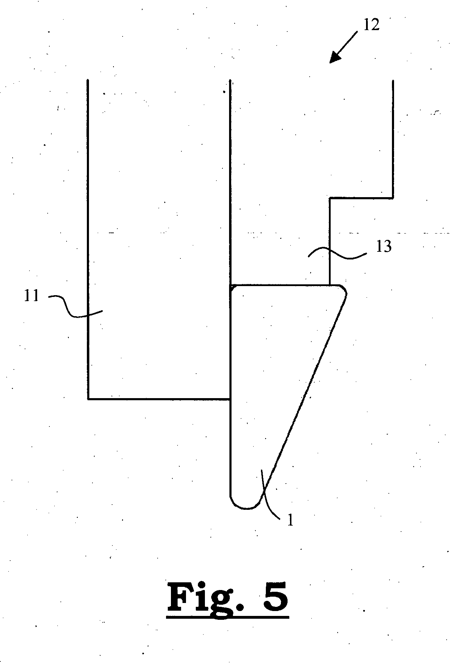

For the production of filter elements according to the invention, the profile wire (1) is pressed by means of a welding device (12), in particular by way of a welding electrode (13) which moves up and down, against the longitudinal bars (9) and welded to the latter. In this case, the welding electrode (13), as shown in Figure 5, comprises supporting means (11), such as, for example, a supporting plate in order to be able to position the profile wire (1) well.

The method comprises the following steps:
a) providing a profile wire (1) with two side flanks (4, 5) extending towards a welding base (3), which side flanks are connected to each other by way of an end face (6) situated opposite the welding base (3), and at least one of the abovementioned side flanks (4, 5) forming an angle (X) lying between 88° and 93° with the end face (6);
b) providing a welding device (12) which comprises supporting means (11) for the abovementioned profile wire (1);
c) welding said profile wire (1) onto the abovementioned bars, during the welding the abovementioned side flank which forms an angle (X) lying between 88° and 93° with the end face (6) abutting against the supporting means (11) in order to position and weld the profile wire (1) in such a way that the abovementioned filtering apertures have a slot aperture of a maximum of 30 microns.

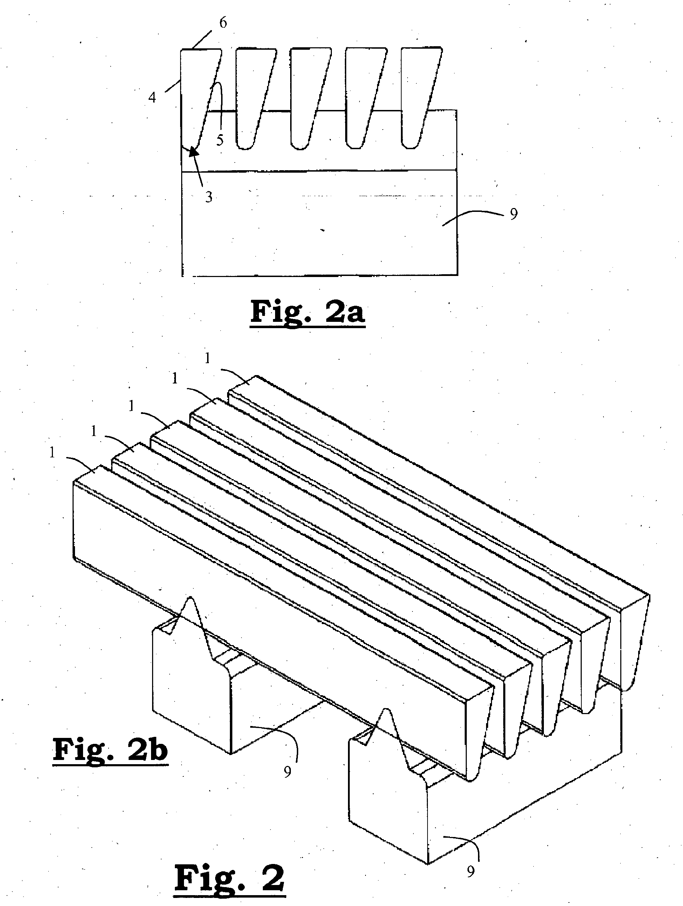

By making at least one of the side flanks (4, 5) form an angle (X) lying between 88° and 93°, in particular 90°, with the end face (6) of the profile wire, as illustrated in Figures 2 and 3, it is ensured that the supporting plate of the welding device can support and guide the profile wire (1) much better, with the result that the profile wire (1) will be positioned much better on the longitudinal bars (9). This means that filter elements (2) with a much smaller tolerance on their slot aperture can be produced, so that filter elements with a much narrower slot aperture can be produced.

Through the use of such profile wire (1), the tolerance on the slot aperture will be reduced to approximately +/- 10 microns. This makes it possible to produce filter elements with slot apertures to a size of 10 microns. With these narrow tolerances on the slot aperture, it will also be possible to filter more accurately. Furthermore, through the smaller tolerances on the slot aperture, it is possible for larger slot apertures (e.g. filters with slot apertures of 0.2 mm) to filter solids more accurately.

Owing to the fact that filter elements (2) can be produced with a slot aperture to a size of 10 microns, it is now possible to replace certain paper and cloth filters with these filter elements. Such filter elements can be cleaned when they are saturated or clogged. Paper and cloth filters cannot in fact be cleaned and must be destroyed, and that costs money. The filter elements according to the invention can even be used for filtering air, dust and gas.

The reduction of slot aperture and more accurate tolerance in production emerge clearly from the example below. In this example, a scanner (QVE200-PRO Quick Vision type made by Mitotoyo - measuring accuracy: 1/10,000 mm) will be used to measure in each case 200 profile widths and 200 slot apertures over an arbitrarily selected distance of the filter element. The scanner passes over profile by profile and slot aperture by slot aperture and records the measured value in each case.

The test was carried out on a production run of 100 filter elements provided with profile wire according to the prior art (isosceles triangle cross section) with a desired slot aperture of 10 microns and a tolerance of +/- 30 microns. In order to achieve the proposed quality level, the measured values must therefore not go above 40 microns (10 microns + 30 microns tolerance).

In a check on 200 slot apertures per filter tube (one production run = 100%), we obtain the following result:
15%: 20 measurements of the 200 between 40 and 50 microns
15%: 10 measurements of the 200 between 40 and 50 microns
70%: 5 measurements of the 200 between 40 and 50 microns

We can therefore conclude from the above results that filter elements provided with profile wire according to the prior art cannot be made with a uniform slot aperture below 40 microns.

In the case of filter elements produced by the method according to the invention and with the same type of proposed slot aperture of 10 microns, in a check on 200 slot apertures per filter tube (one production run = 100%) the following results are obtained:
15%: 20 measurements of the 200 between 20 and 30 microns
15%: 10 measurements of the 200 between 20 and 30 microns
70%: 5 measurements of the 200 between 20 and 30 microns

As emerges clearly from the above results, not one of the slot apertures of the filter element lies above the maximum limit of 40 microns (10 microns + 30 microns tolerance).

In the case of the filter elements according to the invention, the average slot aperture is 40% smaller, and the tolerance will be 65% more accurate compared with what has been the norm until now. In other words, from now onwards +/- 10 microns tolerance instead of +/- 30 microns tolerance can be taken as the norm.

The profile wire (1) of the filter element is connected by way of the welding base (3) to the longitudinal bars (9). As illustrated in Figure 3, the welding base (3) can comprise at least one side face which is not in line with the side flanks (4, 5) extending towards the welding base (3). In Figure 3a, the connecting side face between the abovementioned side flanks (4, 5) forms the welding base (3). The welding base (3) of the profile wire (1) illustrated in Figure 3b comprises two side faces (7, 8) and the connecting side face between the abovementioned side faces (7, 8) which do not lie in line with the side flanks (4, 5) extending towards the welding base.

## Claims

1. A filter element (2) comprising a number of bars (9) running in the longitudinal direction, onto ,which a profile wire (1) is welded and in which filtering apertures are provided between one or more adjacent profile wires, the abovementioned profile wire (1) comprising two side flanks (4, 5) extending towards a welding base (3), the abovementioned side flanks being connected to each other by way of an end face (6) situated opposite the welding base (3), and at least one of the abovementioned side flanks (4, 5) forming an angle (X) lying between 88° and 93° with the end face (6), **characterized in that** the filtering apertures formed have a slot aperture of a maximum of 30 microns.

2. The filter element as claimed in claim 1, **characterized in that** the filtering apertures formed have a slot aperture lying between 10 and 25 microns.

3. The filter element as claimed in claim 1 or 2, **characterized in that** the abovementioned filter element has a tolerance of 25 microns or less on the slot aperture of the filtering apertures formed.

4. The filter element as claimed in one of the preceding claims, **characterized in that** the angle (X) formed is approximately 90°.

5. The filter element as claimed in one of the preceding claims, **characterized in that** the abovementioned filter element is a flat filter.

6. The filter element as claimed in one of claims 1 to 4, **characterized in that** the abovementioned filter element is a round filter.

7. A method for forming a filter element (2) in which one or more profile wires (1) are welded onto a number of bars (9) running in the longitudinal direction, so that filtering apertures are formed between one or more adjacent profile wires, **characterized in that** the method comprises the following steps:
a) providing a profile wire (1) with two side flanks (4, 5) extending towards a welding base (3), the abovementioned side flanks being connected to each other by way of an end face (6) situated opposite the welding base (3), and at least one of the abovementioned side flanks (4, 5) forming an angle (X) lying between 88° and 93° with the end face (6);
b) providing a welding device (12) comprising supporting means (11) for the abovementioned profile wire (1);
c) welding said profile wire (1) onto the abovementioned bars (9), during the welding the abovementioned side flank which forms an angle (X) lying between 88° and 93° with the end face (6) abutting against the supporting means in order to position and weld the profile wire in such a way that the filtering apertures formed have a slot aperture of a maximum of 30 microns.

8. The method for forming a filter element (2) as claimed in claim 7, **characterized in that** the abovementioned supporting means (11) are in the form of a wall abutting against the abovementioned side flank during the welding.

9. The method for forming a filter element (2) as claimed in claim 7 or 8, **characterized in that** the welding device comprises a welding electrode (13) which moves up and down.

10. The method for forming a filter element (2) as claimed in claim 9, **characterized in that** the supporting means (11) form part of the welding electrode (13) which moves up and down.

## Patentansprüche

1. Filterelement (2), umfassend eine Anzahl von in der Längsrichtung verlaufenden Stäben (9), an welche ein Profildraht (1) angeschweißt ist, und bei dem Filteröffnungen zwischen einem oder mehreren benachbarten Profildrähten vorgesehen sind, wobei der vorstehend erwähnte Profildraht (1) zwei Seitenflanken (4, 5) aufweist, die sich zu einer Schweißunterlage (3) erstrecken, wobei die vorstehend erwähnten Seitenflanken über eine Endfläche (6) miteinander verbunden sind, die sich der Schweißunterlage (3) entgegengesetzt befindet, wobei mindestens eine der vorstehend erwähnten Seitenflanken (4, 5) einen zwischen 88° und 93° liegenden Winkel (X) mit der Endfläche (6) bildet, **dadurch gekennzeichnet, dass** die gebildeten Filteröffnungen eine Schlitzöffnung von maximal 30 Mikron haben.

2. Filterelement nach Anspruch 1, **dadurch gekennzeichnet, dass** die gebildeten Filteröffnungen eine Schlitzöffnung haben, die zwischen 10 und 25 Mikron liegt.

3. Filterelement nach Anspruch 1 oder 2, **dadurch gekennzeichnet, dass** das vorstehend erwähnte Filterelement eine Toleranz von 25 Mikron oder weniger an der Schlitzöffnung der gebildeten Filteröffnungen hat.

4. Filterelement nach einem der vorhergehenden Ansprüche, **dadurch gekennzeichnet, dass** der gebildete Winkel (X) ungefähr 90° beträgt.

5. Filterelement nach einem der vorhergehenden Ansprüche, **dadurch gekennzeichnet, dass** es sich bei dem vorstehend erwähnten Filterelement um ein Flachfilter handelt.

6. Filterelement nach einem der Ansprüche 1 bis 4, **dadurch gekennzeichnet, dass** es sich bei dem vorstehend erwähnten Filterelement um ein Rundfilter handelt.

7. Verfahren zum Ausbilden eines Filterelements (2), bei dem ein oder mehrere Profildrähte (1) an eine Anzahl von in der Längsrichtung verlaufenden Stäben (9) so angeschweißt sind, dass Filteröffnungen zwischen einem oder mehreren benachbarten Profildrähten gebildet werden, **dadurch gekennzeichnet, dass** das Verfahren die folgenden Schritte umfasst:
a) Bereitstellen eines Profildrahts (1) mit zwei Seitenflanken (4, 5), die sich zu einer Schweißunterlage (3) erstrecken, wobei die vorstehend erwähnten Seitenflanken über eine Endfläche (6) miteinander verbunden sind, die sich der Schweißunterlage (3) entgegengesetzt befindet, und mindestens eine der vorstehend erwähnten Seitenflanken (4, 5) einen zwischen 88° und 93° liegenden Winkel (X) mit der Endfläche (6) bildet;
b) Bereitstellen eines Schweißgeräts (12) mit Halteeinrichtungen (11) für den vorstehend erwähnten Profildraht (1);
c) Anschweißen des Profildrahts (1) an die vorstehend erwähnten Stäbe (9), wobei während des Anschweißens die vorstehend erwähnte Seitenflanke, die einen zwischen 88° und 93° liegenden Winkel (X) mit der Endfläche (6) bildet, an den Halteeinrichtungen anstößt, um den Profildraht derart zu positionieren und anzuschweißen, dass die gebildeten Schlitzöffnungen eine Schlitzöffnung von maximal 30 Mikron haben.

8. Verfahren zum Ausbilden eines Filterelements (2) nach Anspruch 7, **dadurch gekennzeichnet, dass** die vorstehend erwähnten Halteeinrichtungen (11) in Form einer Wand vorliegen, die während des Schweißens an die vorstehend erwähnte Seitenflanke anstößt.

9. Verfahren zum Ausbilden eines Filterelements (2) nach Anspruch 7 oder 8, **dadurch gekennzeichnet, dass** das Schweißgerät eine Schweißelektrode (13) umfasst, die sich nach oben und unten bewegt.

10. Verfahren zum Ausbilden eines Filterelements (2) nach Anspruch 9, **dadurch gekennzeichnet, dass** die Halteeinrichtungen (11) einen Teil der Schweißelektrode (13) bilden, die sich nach oben und unten bewegt.

## Revendications

1. Elément filtrant (2) comprenant plusieurs barres (9) s'étendant dans le sens longitudinal, sur lesquelles un fil profilé (1) est soudé et dans lesquelles des ouvertures filtrantes sont prévues entre un ou plusieurs fils profilés adjacents, le fil profilé (1) susmentionné comprenant deux flancs latéraux (4, 5) s'étendant vers une base de soudage (3), les flancs latéraux susmentionnés étant reliés l'un à l'autre par une face d'extrémité (6) située à l'opposé de la base de soudage (3), et au moins un desdits flancs latéraux (4, 5) susmentionnés formant un angle (X) compris entre 88° et 93° avec la face d'extrémité (6), **caractérisé en ce que** les ouvertures filtrantes formées ont une fente d'un maximum de 30 microns.

2. Elément filtrant selon la revendication 1, **caractérisé en ce que** les ouvertures filtrantes formées ont une ouverture de fente comprise entre 10 et 25 microns.

3. Elément filtrant selon la revendication 1 ou 2, **caractérisé en ce que** l'élément filtrant susmentionné a une tolérance de 25 microns ou moins sur l'ouverture de fente des ouvertures filtrantes formées.

4. Elément filtrant selon l'une des revendications précédentes, **caractérisé en ce que** l'angle (X) formé est d'environ 90°.

5. Elément filtrant selon l'une des revendications précédentes, **caractérisé en ce que** l'élément filtrant susmentionné est un filtre plat.

6. Elément filtrant selon l'une des revendications 1 à 4, **caractérisé en ce que** l'élément filtrant susmentionné est un filtre rond.

7. Procédé de formation d'un élément filtrant (2) dans lequel un ou plusieurs fils profilés (1) sont soudés sur plusieurs barres (9) s'étendant dans le sens longitudinal, de sorte que des ouvertures filtrantes sont formées entre un ou plusieurs fils profilés adjacents, **caractérisé en ce que** le procédé comprend les étapes suivantes :
a) fourniture d'un fil profilé (1) ayant deux flancs latéraux (4, 5) s'étendant vers une base de soudage (3), les flancs latéraux susmentionnés étant reliés l'un à l'autre par une face d'extrémité (6) située à l'opposé de la base de soudage (3), et au moins un des flancs latéraux (4, 5) susmentionnés formant un angle (X) compris entre 88° et 93° avec la face d'extrémité (6) ;
b) fourniture d'un dispositif de soudage (12) comprenant des moyens de support (11) pour le fil profilé (1) susmentionné ;
c) soudage dudit fil profilé (1) sur lesdites barres (9) susmentionnées, pendant le soudage le flanc latéral susmentionné qui forme un angle (X) compris entre 88° et 93° avec la face d'extrémité (6) butant contre les moyens de support afin de positionner et de souder le fil profilé de telle sorte que les ouvertures filtrantes formées aient une fente d'un maximum de 30 microns.

8. Procédé de formation d'un élément filtrant (2) selon la revendication 7, **caractérisé en ce que** les moyens de support (11) susmentionnés se présentent sous la forme d'une paroi butant contre le flanc latéral susmentionné pendant le soudage.

9. Procédé de formation d'un élément filtrant (2) selon la revendication 7 ou 8, **caractérisé en ce que** le dispositif de soudage comprend une électrode de soudage (13) à mouvement vertical.

10. Procédé de formation d'un élément filtrant (2) selon la revendication 9, **caractérisé en ce que** les moyens de support (11) font partie de l'électrode de soudage (13) à mouvement vertical.
